# EUROPEAN PATENT APPLICATION

(11) **EP 3 610 976 A1**
(43) Date of publication of application: **19.02.2020**
(21) Application number: 19171389.0
(22) Date of filing: 26.04.2019
(51) Int. Cl.: B23K 1/00, B23K 1/005, B23K 15/00, B23K 26/03, B23K 26/06, B23K 26/067, B23K 26/082, B23K 26/20, B23K 101/36

(54) **SYSTEM AND METHOD OF MULTI-BEAM SOLDERING**

(30) Priority: 16.08.2018 CN 201810934730
(71) Applicant: Delta Electronics, Inc., Taoyuan City 33341 (TW)
(72) Inventor: DING, Ren-Feng, 33341 Taoyuan City (TW); CHEN, Hung-Wen, 33341 Taoyuan City (TW); WU, Shu-Han, 33341 Taoyuan City (TW)
(74) Representative: 2K Patentanwälte Blasberg Kewitz & Reichel

(57) **Abstract**

A multi-beam soldering system includes a multi-beam scanner, a sensor, and a controller. The multi-beam scanner generates at least a first beam and a second beam, and guides the first beam to a first element of a soldering zone and guides the second beam to a second element of the soldering zone. The sensor detects a first temperature of the first element and a second temperature of the second element simultaneously during soldering process. The controller adjusts the parameters of the first beam and the second beam under the condition that the first temperature is substantially different from the second temperature.

## Description

### BACKGROUND

### Technical Field

The present disclosure relates to a system and a method of soldering, and in particular it relates to a system and a method of multi-beam soldering.

### Description of the Related Art

The soldering process is one of the standard operating procedures (SOP) in manufacturing electronic products. With the miniaturization and elaboration of such products, many soldering processes are limited to the mechanisms and operations used by soldering equipment. Traditional contact soldering methods, such as iron tip, cannot meet today's requirements. Therefore, non-contact soldering methods have correspondingly been developed to improve soldering process and achieve higher precision. Without the need for contact soldering iron tip, the non-contact soldering methods can be performed more flexibly in tiny, severe operating and positioning, and the heating time can be cut in half.

The non-contact soldering methods mainly use a light source to generate a light beam. The beam propagates in optical fibers, and the propagation of the light beam is adjusted by a lens set in the equipment to focus the light beam to a soldering zone. During the heating, a device pin and a pad are preheated by the focused light beam until they reach the melting point of the solder, thereby bonding the component to a circuit board by the solder.

China patent NO. CN 105772939B discloses a laser double-beam welding device and a method thereof, characterized by using a beam splitter and a laser scanning device to guide a double-beam to a solder and a welding zone, respectively, to overcome problems such as insufficient welding quality, instability of the welding process, and poor filling of soldering wire. However, the melting point of the welding flux coated on the solder is far below the melting point of the welding metal. Guiding the beams to focus on the solder will cause volatilization of the welding flux before it can exert its effects. Furthermore, this welding method may even cause a sputtering of the solder which can contaminate the operation region.

Although there have been many developments in non-contact soldering methods in order to keep pace with the continued miniaturization of electronic products, non-contact soldering methods can improve the processes used in manufacturing electronic products which are continuously being confronted with new challenges as electronic products continue to be miniaturized. Therefore, it is an object of the invention to solve the abovementioned drawbacks of the prior art.

### BRIEF SUMMARY

In accordance with a first aspect of the invention, this problem is solved by a multi-beam soldering system of the disclosure. The multi-beam soldering system includes a multi-beam scanner, a sensor, and a controller. The multi-beam scanner generates at least a first beam and a second beam. The multi-beam scanner guides the first beam to a first element of a soldering zone and guides the second beam to a second element of the soldering zone. During the soldering process, the sensor is used for simultaneously detecting at least a first temperature of the first element and a second temperature of the second element. The controller is used for adjusting the parameters of the first beam and the second beam under a condition that the first temperature is substantially different from the second temperature.

In accordance with a second aspect of the invention, this problem is solved by a multi-beam soldering method of the disclosure. The multi-beam soldering method includes guiding a first beam to heat a first element of a soldering component on a soldering zone of a substrate, and guiding a second beam to heat a second element on the soldering zone of the substrate; detecting at least a first temperature of the first element and a second temperature of the second element simultaneously; and adjusting parameters of the first beam and the second beam under a condition that the first temperature is substantially different from the second temperature.

### BRIEF DESCRIPTION OF THE DRAWINGS

The disclosure can be more fully understood from the following detailed description when read with the accompanying figures. It should be noted that, in accordance with standard practice in the industry, various features are not drawn to scale. In fact, the dimensions of the various features may be arbitrarily increased or reduced for clarity of discussion.
Fig. 1 is an exemplary multi-beam soldering method in accordance with some embodiments of the present disclosure.
Fig. 2 is a schematic view of a multi-beam soldering system in accordance with some embodiments of the present disclosure.
Fig. 3 is a schematic view of using a galvanometric scanner to change a focus position of a beam in accordance with some embodiments of the present disclosure.
Figs. 4A-4B are schematic views of using a combination of a galvanometric scanner and a reflective lens to change a focus position of a beam in accordance with some embodiments of the present disclosure.
Figs. 5A-5B are schematic views of using a combination of a galvanometric scanner, a reflective lens, and beam splitters to change a focus position of a beam in accordance with some embodiments of the present disclosure.
Fig. 6 is a schematic view of a focal spot and a non-focal zone of a beam in accordance with some embodiments of the present disclosure.
Fig. 7 is a schematic view of a focusing energy distribution diagram of a first beam and a second beam in accordance with some embodiments of the present disclosure.
Fig. 8 is a schematic view of that the detected temperatures of a first element and a second element are substantially the same in accordance with some embodiments of the present disclosure.

### DETAILED DESCRIPTION

The following disclosure provides many different embodiments, or examples, for implementing different features of the provided subject matter. Specific examples of components and arrangements are described below to simplify the present disclosure. These are, of course, merely examples and are not intended to be limiting. For example, the formation of a first feature over or on a second feature in the description that follows may include embodiments in which the first and second features are formed in direct contact, and may also include embodiments in which additional features may be formed between the first and second features, such that the first and second features may not be in direct contact. In addition, the present disclosure may repeat reference numerals and/or letters in the various examples. This repetition is for the purpose of simplicity and clarity and does not in itself dictate a relationship between the various embodiments and/or configurations discussed.

The terms "about", "approximately", and "substantially" used herein generally refer to a value of an error or a range within 40 percent, preferably within 20 percent, and more preferably within 10 percent, within 5 percent, within 3 percent, within 2 percent, or within 1 percent. If there is no specific description, the mentioned values are regarded as an approximation that is the error or the range expressed as "about", "approximate", or "substantially".

Some variable embodiments of the disclosure are described. Additional operations can be provided before, during, and/or after the steps described in these embodiments. Some of the steps that are described can be replaced or eliminated for different embodiments. Some of the features described below can be replaced or eliminated for different embodiments. Although some embodiments are discussed with operations performed in a particular order, these operations may be performed in another logical order.

The present disclosure provides embodiments of a multi-beam soldering system and a multi-beam soldering method. In the embodiments, multiple beams are used in a soldering process, and a sensor is used to provide real-time detection of temperatures of pins of a component and pads or other soldering elements. The detected temperatures are fed to a controller which synchronously adjusts the parameters of the beams to heat the pins and pads or other soldering elements uniformly to enhance the mechanical properties and quality of the solder joint.

In traditional laser soldering, a single laser beam is focused on a soldering zone. The single laser beam mainly heats pins of an element and pads or other portions, and the energy distribution of the focused laser beam in transverse direction is a Gaussian distribution. Furthermore, due to the differences between the thermal conductivities of the respective materials of the soldering elements, the elements in the soldering zone may reach a very much different temperatures during preheating which causes different surface energies and leads to non-uniform degree of wetting over the soldering zone. Thus, the solder thus formed may have a non-uniform structural distribution between the pin and the pad, and this may further reduce the strength and robustness of the solder joint, and even result in a solder joint with defects of solder empty, non-wetting, cold-soldering, or the like.

An embodiment of the present disclosure uses multiple beams to heat a pin of a component and a pad uniformly and simultaneously and uses a sensor to detect temperatures of the pin and the pad respectively, and signals of the sensor feeds to a controller to adjust the parameters of the multiple beams. The temperatures of the pin and the pad are substantially the same through the uniform heating, so the degree of wetting and the mechanical properties of the solder joint are further enhanced to keep the fine qualities of soldering.

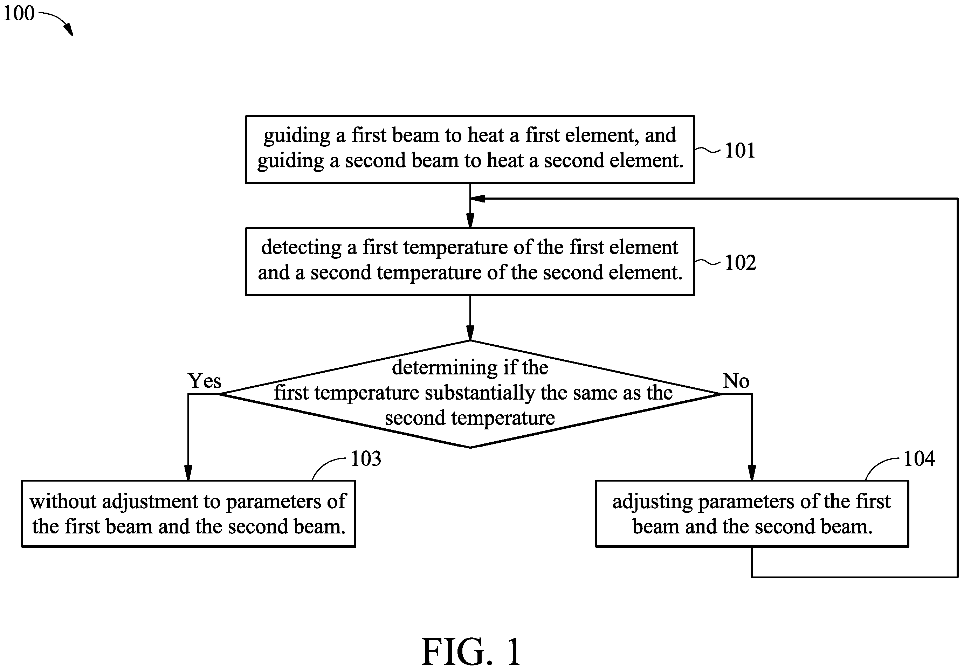

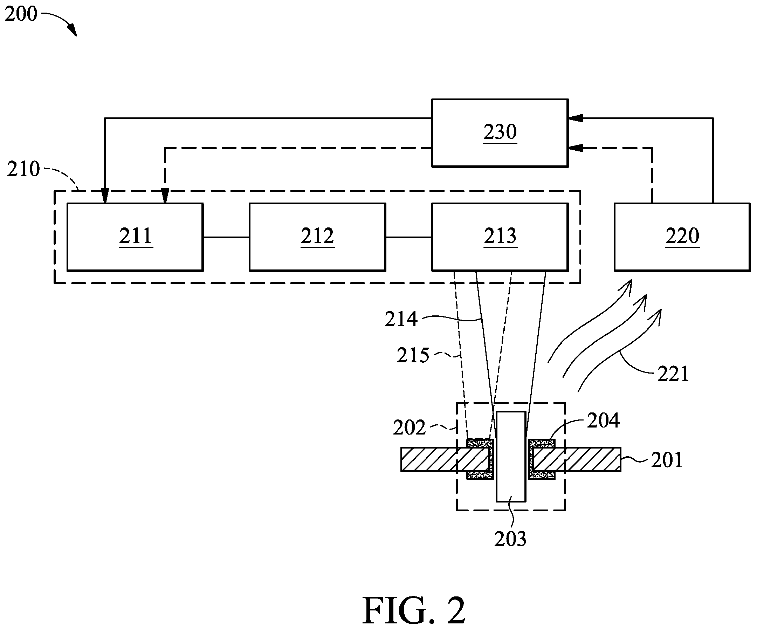

The following embodiments of the present disclosure are described with reference to a multi-beam soldering system 200 of Fig. 2 and a multi-beam soldering method 100 of Fig. 1. As shown in Fig. 2, the multi-beam soldering system 200 of the present disclosure mainly includes a multi-beam scanner 210, a sensor 220, and a controller 230. In some embodiments, in a step 101, a first beam 214 is guided to heat a first element 203 and a second beam 215 is guided to heat a second element 204. In step 102, the sensor 220 is used to detect a first temperature of the first element 203 and a second temperature of the second element 204. If the detected temperatures of the elements are substantially the same, the method proceeds to step 103 without adjusting the parameters of the first beam 214 and the second beam 215. On the other hand, if the detected temperatures of the elements are substantially different from each other, the method proceeds to step 104, in which the controller 230 adjusts the parameters of the first beam 214 and the second beam 215. In some embodiments, the sensor 220 feeds the detected temperatures of the first element 203 and the second element 204 respectively to the controller 230 immediately. The controller 230 can adjust the respective parameters of each beam automatically to heat the first element 203 and the second element 204 to reach substantially the same temperature.

In some embodiments, the multi-beam scanner 210 of Fig. 2 includes a light source 211, a lens set 213, and a galvanometric scanner 212. The multi-beam scanner 210 is used to generate the first beam 214 and the second beam 215, and as shown in Fig. 1, in step 101 the first beam 214 is guided to heat the first element 203 of a soldering zone 202 and the second beam 215 is guided to heat the second element 204 of the soldering zone 202 to heat the first element 203 and the second element 204 respectively. As shown in Fig. 2, the first element 203 is an element of a soldering component located in the soldering zone 202, and the second element 204 is an element of a substrate located in the soldering zone 202. In some embodiments, the first element 203 is a pin, and the second element 204 is a pad. In other embodiments, the first element 203 may be an electrical wire, a lead of a surface-mount device (SMD), a lead of an integrated circuit chip (IC chip), and a lead or a pad of a ball grid array (BGA), and the second element 204 may be a pin, an electrical wire, a lead of a surface-mount device (SMD), a lead of an integrated circuit chip (IC chip), and a lead or a pad of a ball grid array (BGA). According to some embodiments of the present disclosure, using the first beam 214 and the second beam 215 to heat the first element 203 and the second element 204 respectively can make the energy distribution more uniform, make the first temperature of the first element 203 and the second temperature of the second element 204 substantially the same, and enhance the degree of wetting and the mechanical properties of the solder joint to keep the fine qualities of soldering.

According to some embodiments of the present disclosure, the light source 211 is used to generate at least one beam. While the light source 211 generates two beams, the first beam 214 and the second beam 215, as shown in Fig.2, it is not limited thereto. The number of the beams generated by the light source 211 may be three, four, five, or more. In other embodiments, the light source 211 may only generate one beam and a beam splitter is used to split the beam into multiple beams. According to some embodiments, the beams generated by the light source 211 may be a plurality of focused light beams or a plurality of parallel light beams. In some embodiments, the light source 211 may be a laser beam, an X ray, an ultraviolet light, a terahertz radiation, a micro wave, or a combination thereof. In some embodiments, the light source 211 may be a plurality of light sources, and the plurality light sources may be light sources of the same type or light sources of different types.

According to some embodiments of the present disclosure, the lens set 213 is used to guide the beams generated by the light source 211, and as shown in Fig. 2, the lens set 213 may guide the first beam 214 to the first element 203 and guide the second beam 215 to the second element 204, but it is not limited thereto. The lens set 213 may guide a plurality of beams to a plurality of device elements with different combinations of lenses. In some embodiments, the lens set 213 may guide one or more than one beams to the first element 203, and guide one or more than one beams to the second element 204 simultaneously. For example, in some embodiments, the lens set 213 may guide one beam to the first element 203, and guide two beams to the second element 204. In other embodiments, the lens set 213 may guide three beams to the first element 203, and guide one beam to the second element 204. In other words, the number of the beams guided by the lens set 213 to the first element 203 and the second element 204 respectively is not limited thereto, and it may be adjusted according to the heating condition required to heat the first element 203 and the second element 204 to reach substantially the same temperature. In some embodiments, the lens set 213, including at least a reflective lens, at least a beam splitter, or the combination thereof, is used to guide the beams for changing their focus positions.

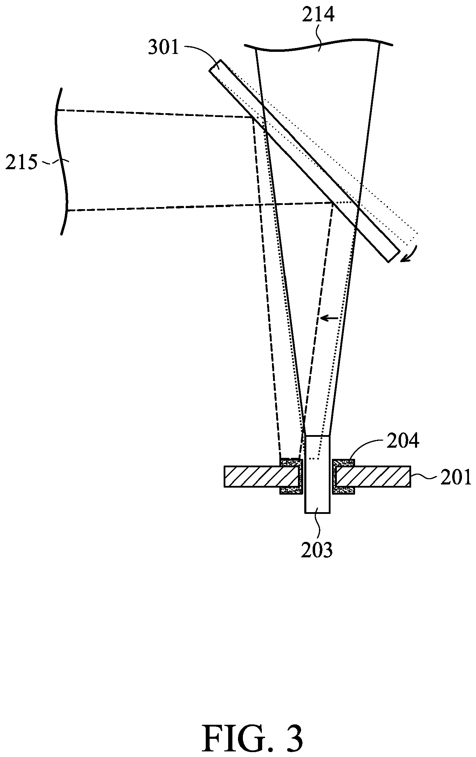

Figs. 3-5B illustrate different exemplary configurations for the combination of different positions and respective surface coatings of a reflective lens 401 and/or a beam splitter 501/502 and/or a galvanometric scanner lens 301 of a galvanometric scanner 212 included in the lens set 213, and the configurations are used to adjust the focus positions of the multiple beams. Guiding the beams to soldering elements respectively in the soldering zone can heat the soldering elements uniformly.

According to some embodiments of the present disclosure, the multi-beam scanner 210 includes a galvanometric scanner 212, and the galvanometric scanner 212 includes at least a galvanometric scanner lens 301 which is used to guide beams for changing their focus positions. Fig. 3 illustrates the first beam 214 and the second beam 215 with different wavelengths using the galvanometric scanner lens 301 to change their respective focus positions. The galvanometric scanner lens 301 of the galvanometric scanner 212 has a surface coating. In some embodiments, as shown in Fig. 3, the first beam 214 can transmit the galvanometric scanner lens 301 directly, and the second beam 215 can be reflected by the galvanometric scanner lens 301.

For example, the reflectivity of the surface coating of the galvanometric scanner lens 301 to a beam with a wavelength in a range from the visible light wavelength (about 400 nanometers (nm)) to the infrared wavelength (about 1900 nm) is greater than 99%. Thus, when the wavelength of the first beam 214 is outside the range from the visible light wavelength (about 400 nm) to the infrared wavelength (about 1900 nm), the first beam 214 can transmit the galvanometric scanner lens 301 directly. However, when the wavelength of the second beam 215 is within the range from the visible light wavelength (about 400 nm) to the infrared wavelength (about 1900 nm), the second beam 215 can be reflected by the galvanometric scanner lens 301.

In some embodiments, as shown in Fig. 3, the first beam 214 may have a fixed optical path and the optical path of the second beam 215 may be changed through the galvanometric scanner lens 301 to make the first beam 214 and the second beam 215 parallel and substantially co-axial to irradiate the same plane. By adjusting the galvanometric scanner lens 301 to adjust the focus position of the second beam 215, the first beam 214 is guided to the first element 203 and the second beam 215 is guided to the second element 204.

It should be noted that the surface coating of the galvanometric scanner lens 301 and the correspondent reflectivity, refraction index, transmittance, and other optical properties described herein are exemplary, and the present disclosure is not limited thereto.

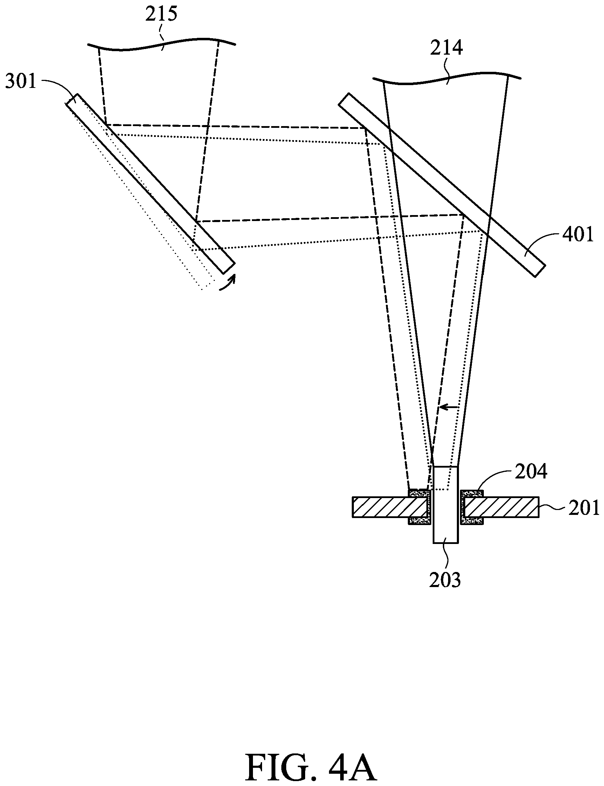

According to some other embodiments of the present disclosure, the multi-beam scanner 210 includes a lens set 213, and the lens set 213 includes at least a reflective lens 401 which is used to guide beams for changing their focus positions. Figs. 4A-4B illustrate the first beam 214 and the second beam 215 with different wavelengths using a combination of the galvanometric scanner lens 301 and the reflective lens 401 to change their respective focus positions in accordance with some other embodiments of the present disclosure. The galvanometric scanner lens 301 and the reflective lens 401 have respective surface coatings. In some embodiments, as shown in Fig. 4A, the first beam 214 can transmit the reflective lens 401 directly, and the second beam 215 can be reflected by the galvanometric scanner lens 301 first and then reflected by the reflective lens 401.

For example, the reflectivity of the surface coating of the reflective lens 401 to a beam with a wavelength in a range from about 400 nm to about 700 nm is greater than 90%, and the transmittance to a beam with a wavelength in a range from about 1650 nm to about 2100 nm is greater than 90%. For example, the reflectivity of the surface coating of the galvanometric scanner lens 301 to a beam with a wavelength in a range from the visible light wavelength (about 400 nm) to the infrared wavelength (about 1900 nm) is greater than 99%. In the circumstance, when the wavelength of the first beam 214 is within a range from about 1650 nm to about 2100 nm, the first beam 214 can transmit the reflective lens 401 directly. However, when the wavelength of the second beam 215 is within a range from about 400 nm to about 700 nm, the second beam 215 can be reflected by the galvanometric scanner lens 301 first and then reflected by the reflective lens 401.

In some embodiments, as shown in Fig. 4A, the first beam 214 may have a fixed optical path and the optical path of the second beam 215 may be changed by being reflected by the galvanometric scanner lens 301 first and then reflected by the reflective lens 401 to make the first beam 214 and the second beam 215 parallel and substantially co-axial to irradiate the same plane. By adjusting the galvanometric scanner lens 301 and the reflective lens 401 to adjust the focus position of the second beam 215, the first beam 214 is guided to the first element 203 and the second beam 215 is guided to the second element 204.

It should be noted that the surface coatings of the galvanometric scanner lens 301 and the reflective lens 401 and the correspondent reflectivity, refraction index, transmittance, and other optical properties described herein are exemplary, and the present disclosure is not limited thereto.

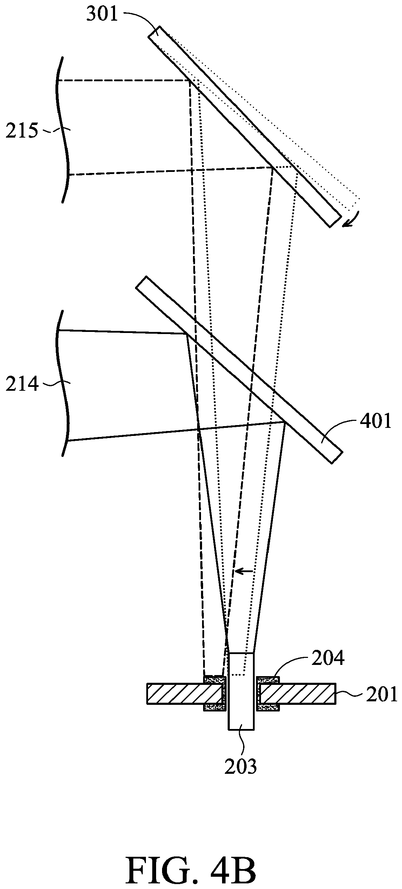

In some embodiments, as shown in Fig. 4B, the first beam 214 may be reflected by the reflective lens 401, and the second beam 215 may be reflected by the galvanometric scanner lens 301 first and then transmit the reflective lens 401 directly. In some embodiments, for example, the respective surface coatings of the galvanometric scanner lens 301 and the reflective lens 401 have the same optical properties as those of the above described embodiments provided in Fig. 4A, and the description is not repeated herein.

In some embodiments, as shown in 4B, the wavelength of the first beam 214 is within a range from about 400 nm to about 700 nm, so the first beam 214 can be reflected by the reflective lens 401. The wavelength of the second beam 215 is within a range from about 1650 nm to about 1900 nm, so the second beam 215 can be reflected by the galvanometric scanner lens 301 first and then it can transmit the reflective lens 401 directly.

In some embodiments, as shown in Fig. 4B, the first beam 214 may have a fixed optical path reflected by the reflective lens 401 and the optical path of the second beam 215 may be changed by being reflected by the galvanometric scanner lens 301 first and then transmit the reflective lens 401 to make the first beam 214 and the second beam 215 parallel and substantially co-axial to irradiate the same plane. By adjusting the galvanometric scanner lens 301 and the reflective lens 401 to adjust the focus position of the second beam 215, the first beam 214 is guided to the first element 203 and the second beam 215 is guided to the second element 204.

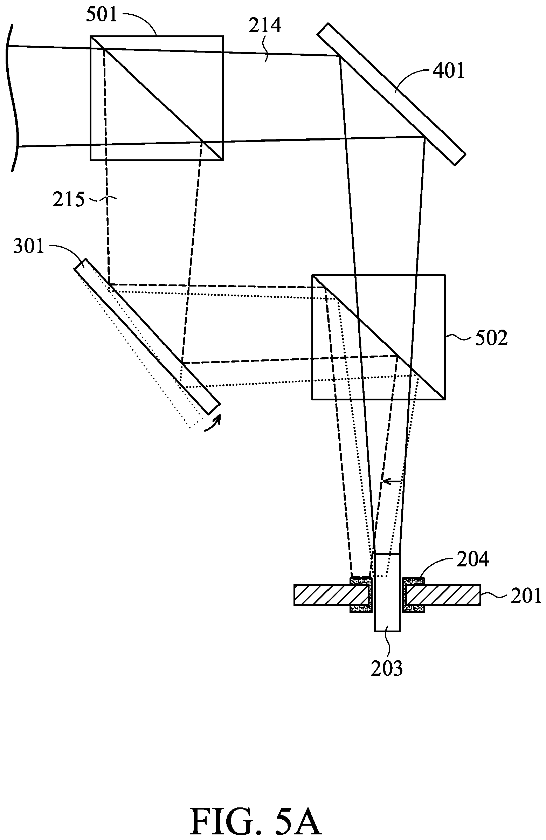

According to some more embodiments of the present disclosure, the multi-beam scanner 210 includes a galvanometric scanner 212 and a lens set 213, and the galvanometric scanner 212 includes at least a galvanometric scanner lens 301, and the lens set 213 includes at least a reflective lens 401 and a beam splitter 501/502 which are used to guide the beams for changing their focus positions. Figs. 5A-5B illustrate the first beam 214 and the second beam 215 with different wavelengths using a combination of the galvanometric scanner lens 301, the reflective lens 401, and the beam splitter 501/502 to change their respective focus positions in accordance with the present disclosure, wherein the galvanometric scanner lens 301 and the reflective lens 401 in Figs. 5A-5B are configured in different positions. In some embodiments, it may also use a first beam splitter 501 to split a single beam into the first beam 214 and the second beam 215 and then use a combination of the galvanometric scanner lens 301, the reflective lens 401, and a second beam splitter 502 to change their respective focus positions. In some embodiments, the beam splitter 501/502 is a polarization beam splitters (PBS).

In some embodiments, as shown in Fig. 5A, the first beam splitter 501 is used to split a single beam into the first beam 214 and the second beam 215, and the first beam 214 has an optical path different from that of the second beam 215. The first beam 214 is reflected by the reflective lens 401 first and then the first beam 214 transmits the second beam splitter 502 directly, and the second beam 215 is reflected by the galvanometric scanner lens 301 first and then reflected by the second beam splitter 502. In other embodiments, the first beam 214 and the second beam 215 may also be two beams generated by the light source, and the first beam 214 transmits the first beam splitter 501 directly and the second beam 215 is reflected by the first beam splitter 501.

According to some embodiments of the present disclosure, the reflective lens 401, the beam splitter 501/502 included in the lens set 213 and the galvanometric scanner lens 301 included in the galvanometric scanner 212 have respective surface coatings. In some embodiments, the first beam splitter 501 may have a surface coating that is the same as that of the second beam splitter 502. In some embodiments, the first beam splitter 501 may have a surface coating different from that of the second beam splitter 502. For example, the reflective lens 401 of the lens set 213 has the same surface coating as the galvanometric scanner lens 301 of the galvanometric scanner 212, and the reflectivity of the surface coating to a beam with a wavelength in a range from the visible light wavelength (about 400 nm) to the infrared wavelength (about 1900 nm) is greater than 99%. In the other hand, a surface coating of the first beam splitter 501 of the lens set 213 has a high reflectivity (e.g., a reflectivity greater than 90%) to a beam with a wavelength in a range from about 400 nm to about 700 nm, and the surface coating has a high transmittance (e.g., a transmittance greater than 90%) to a beam with a wavelength in a range from about 1650 nm to about 2100 nm.

In some embodiments, as shown in 5A, for example, the wavelength of the first beam 214 is within a range from about 1650 nm to about 1900 nm, so the first beam 214 can transmit the first beam splitter 501 directly, be reflected by the reflective lens 401, and then transmit the second beam splitter 502 directly. However, the wavelength of the second beam 215 is within a range from about 400 nm to about 700 nm, so the second beam 215 can be reflected by the first beam splitter 501, the galvanometric scanner lens 301, and the second beam splitter 502 sequentially.

In other embodiments, a first beam splitter 501 with another surface coating is provided. For example, a surface coating of the first beam splitter 501 has a high reflectivity (e.g., a reflectivity greater than 98%) to a beam with a wavelength in a range from about 900 nm to about 1100 nm, and the surface coating has a high transmittance (e.g., a transmittance greater than 93%) to a beam with a wavelength in a range from about 1650 nm to about 2100 nm. In the circumstance, optical paths of the guided beams shown in Fig. 5A can be achieved when the wavelength of the first beam 214 is within a range from about 1650 nm to about 1900 nm and the wavelength of the second beam 215 is within a range from about 400 nm to about 1100 nm. It should be noted that the surface coatings of the galvanometric scanner lens 301, the reflective lens 401, and the first beam splitter 501 and the correspondent reflectivity, refraction index, transmittance, and other optical properties described herein are exemplary, and the present disclosure is not limited thereto.

In some embodiments, as shown in Fig. 5A, the first beam 214 may have a fixed optical path reflected by the reflective lens 401 and the optical path of the second beam 215 may be changed by being reflected by the first beam splitter 501, the galvanometric scanner lens 301, and the second beam splitter 502 sequentially to make the first beam 214 and the second beam 215 parallel and substantially co-axial to irradiate the same plane. By adjusting the galvanometric scanner lens 301, the reflective lens 401, the first beam splitter 501, and the second beam splitter 502 to adjust the focus position of the second beam 215, the first beam 214 is guided to the first element 203 and the second beam 215 is guided to the second element 204.

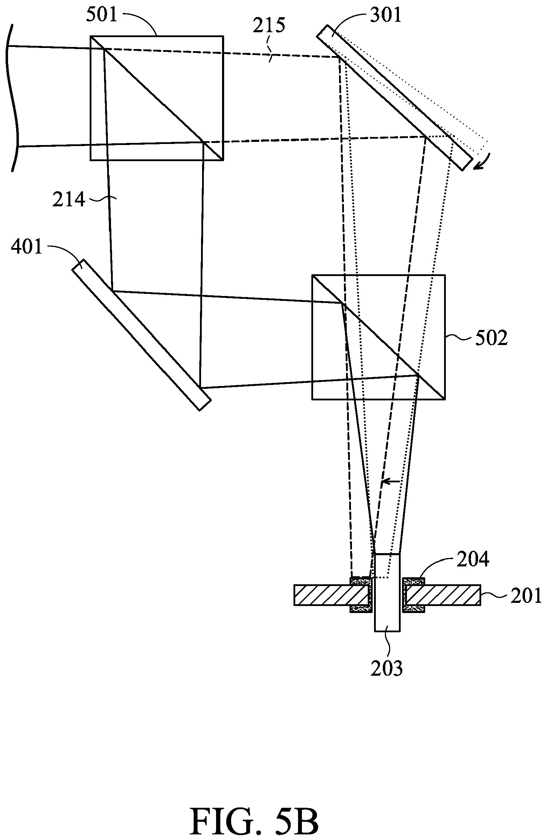

In some embodiments, as shown in Fig. 5B, the first beam splitter 501 is used to split a single beam into the first beam 214 and the second beam 215, and the first beam 214 has an optical path different from that of the second beam 215. The first beam 214 is reflected by the reflective lens 401 first and then reflected by the second beam splitter 502, and the second beam 215 is reflected by the galvanometric scanner lens 301 first and then the second beam 215 transmits the second beam splitter 502. In other embodiments, the first beam 214 and the second beam 215 may also be two beams generated by the light source, and the first beam 214 is reflected by the first beam splitter 501 and the second beam 215 transmits the first beam splitter 501 directly.

In some embodiments, the first beam splitter 501 may have the same surface coating as the second beam splitter 502. In some embodiments, the first beam splitter 501 may have a surface coating different from that of the second beam splitter 502. For example, the reflective lens 401 of the lens set 213 has the same surface coating as the galvanometric scanner lens 301 of the galvanometric scanner 212, and the reflectivity of the surface coating to a beam with a wavelength in a range from the visible light wavelength (about 400 nm) to the infrared wavelength (about 1900 nm) is greater than 99%. In the other hand, a surface coating of the first beam splitter 501 included in the lens set 213 has a high reflectivity (e.g., a reflectivity greater than 90%) to a beam with a wavelength in a range from about 400 nm to about 700 nm, and the surface coating has a high transmittance (e.g., a transmittance greater than 90%) to a beam with a wavelength in a range from about 1650 nm to about 2100 nm.

In some embodiments, as shown in 5B, for example, the wavelength of the first beam 214 is within a range from about 400 nm to about 700 nm, so the first beam 214 can be reflected by the first beam splitter 501, the reflective lens 401, and the second beam splitter 502 sequentially. However, the wavelength of the second beam 215 is within a range from about 1650 nm to about 1900 nm, so the second beam 215 can transmit the first beam splitter 501, reflected by the galvanometric scanner lens 301, and transmit the second beam splitter 502 directly.

In other embodiments, a first beam splitter 501 with another surface coating is provided. For example, a surface coating of the first beam splitter 501 has a high reflectivity (e.g., a reflectivity greater than 98%) to a beam with a wavelength in a range from about 900 nm to about 1100 nm, and the surface coating has a high transmittance (e.g., a transmittance greater than 93%) to a beam with a wavelength in a range from about 1650 nm to about 2100 nm. In such cases, the optical paths of the guided beams shown in Fig. 5B can be achieved when the wavelength of the first beam 214 is within a range from about 900 nm to about 1100 nm, and the wavelength of the second beam 215 is within a range from about 1650 nm to about 1900 nm. It should be noted that the surface coatings of the galvanometric scanner lens 301, the reflective lens 401, and the first beam splitter 501 and the correspondent reflectivity, refraction index, transmittance, and other optical properties described herein are exemplary, and the present disclosure is not limited thereto.

In some embodiments, as shown in Fig. 5B, the first beam 214 may have a fixed optical path reflected by the first beam splitter 501, the reflective lens 401, and the second beam splitter 502, and the optical path of the second beam 215 may be changed by transmitting the first beam splitter 501, reflected by the galvanometric scanner lens 301, and then transmitting the second beam splitter 502 directly to make the first beam 214 and the second beam 215 parallel and substantially co-axial to irradiate the same plane. By adjusting the galvanometric scanner lens 301 to adjust the focus position of the second beam 215, the first beam 214 is guided to the first element 203 and the second beam 215 is guided to the second element 204.

As detailed in the description above, some embodiments of the present disclosure provide a beam (or a plurality of beams) with a fixed optical path irradiating the first element 203 in the soldering zone 202 and another beam (or a plurality of other beams) which is adjusted by the galvanometric scanner 212 irradiating the first element 203, the second element 204, or other soldering elements to make the elements in the mentioned soldering zone 202 reach substantially the same temperature. In some embodiments, focus positions of the beams are adjusted by the galvanometric scanner 212 and the lens set 213. For example, the focus positions of the beams may be configured corresponding to the contour and the shape of the soldering elements or the relative positions of the soldering element and the pad, and may be changed according to a geometric pattern, such as a circle, a ring, or a polygon (for example, a triangle, a quadrilateral, a hexagon, an octagon, or other polygons) to make the temperature distribution of the soldering elements more uniform.

According the other embodiments of the present disclosure, as shown in Fig. 2, the galvanometric scanner 212 included in the multi-beam scanner 210 may be replaced by an actuating device. In some embodiments, the galvanometric scanner 212 included in the multi-beam scanner 210 may include a stepping motor, a voice coil motor, or a piezoelectric actuator to control the optical paths and focus positions of beams. In other embodiments, the focus positions of the beams are adjusted by the actuating device and the lens set 213, for example, the focus positions of the beams may be configured in such a way that they correspond to the contour and the shape of the soldering elements or the relative positions of the soldering element and the pad, and they may be changed according to a geometric pattern, such as a circle, a ring, or a polygon (for example, a triangle, a quadrilateral, a hexagon, an octagon, or other polygons) to make the temperature distribution of the soldering elements more uniform.

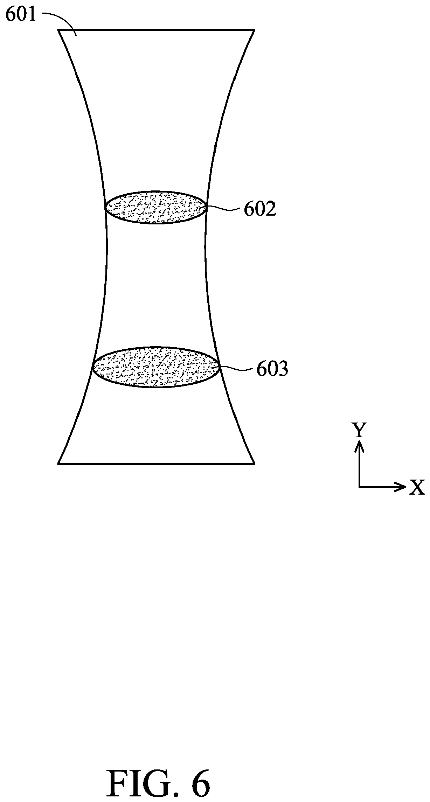

According to some embodiments of the present disclosure, a beam 601 may be the Gaussian beam or the beam 601 may have a shape similar to the Gaussian beam. As shown in Fig. 6, the beam 601 may be focused on a focal spot 602, i.e. the beam waist, wherein the X-axis represents a diameter of a light spot and the Y-axis represents a focal length. In other embodiments, the beam 601 may be converged on a non-focal zone 603, i.e. other focal zones except for the beam waist.

According to some embodiments of the present disclosure, the multi-beam soldering system 200 in Fig. 2 further includes a sensor 220, and as shown in step 102, the sensor 220 can be used to detect the first temperature of the first element 203 and the second temperature of the second element 204 simultaneously during soldering process. In some embodiments, the sensor 220 may be a non-contact type sensor, a contact-type sensor, or an equivalent temperature sensor. In some embodiments, the detecting target of the sensor 220 is visible light or invisible light, and in other embodiments, the detecting target of the sensor 220 is a far-infrared ray or a color temperature to detect the first temperature of the first element 203 and the second temperature of the second element 204.

According to some embodiments of the present disclosure, the multi-beam soldering system 200 in Fig. 2 further includes a controller 230, and as shown in step 104, the controller 230 can be used to adjust the parameters of the first beam 214 and the second beam 215 under a condition that the first temperature of the first element 203 is substantially different from the second temperature of the second element 204. In some embodiments, the controller 230 can be used to adjust the power of the first beam 214 and the power of the second beam 215, and the adjusted beams with different power are used to heat each element with different thermal conductivities respectively to reach substantially the same temperature. In some embodiments, the controller 230 can not only be used to adjust the power of the first beam 214 and the power of the second beam 215 but it can also be used to change the focus positions of the beams or to adjust the soldering elements to be heated in the focal spot 602 or in the non-focal zone 603. According to some embodiments of the present disclosure, the controller 230 included in the multi-beam soldering system 200 may be a proportional-integral-derivative (PID) controller, a fuzzy controller, a closed-loop controller, or an equivalent feedback controller.

According to some embodiments of the present disclosure, as shown in Fig. 1, in step 101, the first beam 214 is guided to heat the first element 203 and the second beam 215 is guided to heat the second element 204. In step 102, the sensor 220 is used to detect the first temperature of the first element 203 and the second temperature of the second element 204. If the detected temperatures of the elements are substantially the same, such as when the difference between the first temperature and the second temperature is under a critical value, the method proceeds to step 103 without adjusting the parameters of the first beam 214 and the second beam 215. On the other hand, if the detected temperatures of the elements are substantially different from each other, such as when the difference between the first temperature and the second temperature is greater than a critical value, the method proceeds to step 104 to make the controller 230 adjust the parameters of the first beam 214 and the second beam 215. In some embodiments, the critical value is about 30%. In other embodiments, the critical value may be 25%, 15%, or 10%. In some embodiments, the sensor 220 has a thermal image camera, and the sensor 220 immediately feeds thermal images (or the detected temperatures of each component) of the first element 203 and the second element 204 (e.g. a pin and a pad) to the controller 230 respectively. The controller 230 can automatically adjust the power and the focus position of each beam or adjust the soldering element to be heated in the focal spot 602 or in the non-focal zone 603 to heat the first element 203 and the second element 204 to reach substantially the same temperature, such as the difference between the first temperature and the second temperature is under a critical value.

According to some embodiments of the present disclosure, for example, the critical value (e.g. ±15%) of the difference between the first temperature and the second temperature to determine whether to drive the controller 230 may be defined by the proportional-integral-derivative (PID) parameters of the controller 230. The melting point of a lead solder is about 183.3 °C, the melting point of a SAC305 lead-free solder is in a range from about 217 °C to about 219 °C, and the melting point of a SnCuNi lead-free solder is about 227 °C. A temperature above the melting point of a solder is chosen to be the soldering temperature between elements, and it may be in a range from about 280 °C to 400 °C. In some embodiments, the critical value may be an acceptance region for the difference between the soldering temperature and the melting point of the solder. In other embodiments, the critical value also varies according to whether another solder with a different melting point from the above is used, or whether another soldering work piece or controller is used other than the ones described above.

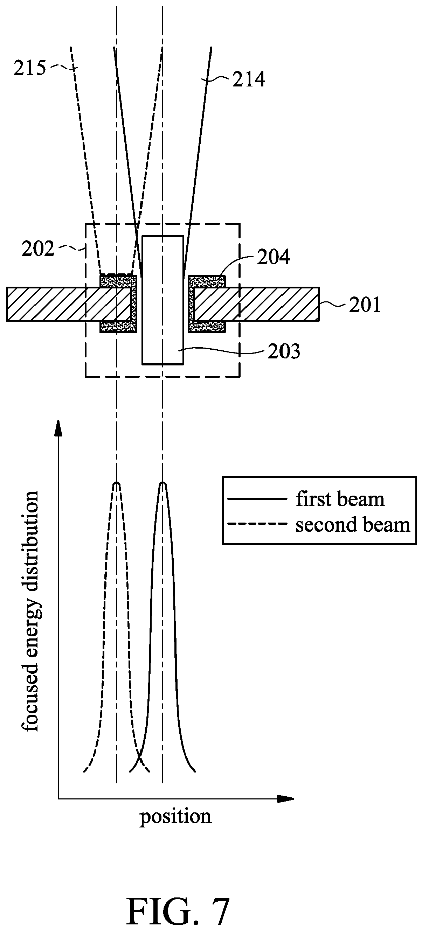

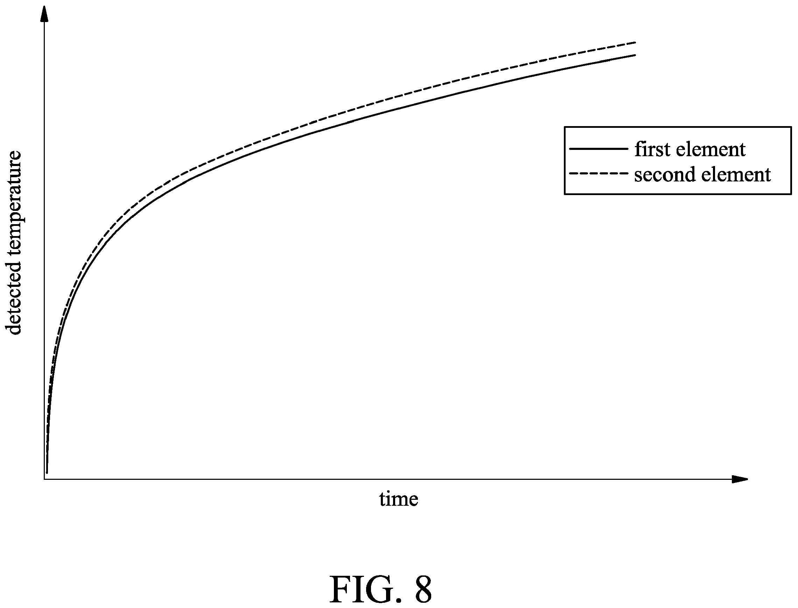

According to some embodiments of the present disclosure, the galvanometric scanner 212 or the actuating device is used to the guide multiple beams to the first element 203 and the second element 204 respectively. The first element 203 and the second element 204 are heated with different levels of power to present a uniform focused energy distribution of them in transverse direction as shown in Fig. 7. In some embodiments, as shown in Fig. 8, under a condition that the first element 203 and the second element 204 have a uniform focused energy distribution, the first element 203 and the second element 204 can reach substantially the same temperature.

In some embodiments of the present disclosure, a galvanometric scanner 212 is used to guide the multiple beams to heat a pin and a pad simultaneously and uniformly, and at the same time, a sensor 220 is used to detect temperatures of the pin and the pad respectively and synchronously feed to a controller 230 to adjust the power of the multiple beams. The difference between the temperatures of the pin and the pad can be under a critical value (e.g. about 30%) by a uniform heating which enhances the degree of wetting and the mechanical properties of the solder joint to keep the fine qualities of soldering.

Although the present disclosure has been described above by various embodiments, these embodiments are not intended to limit the disclosure. Those skilled in the art should appreciate that they may make various changes, substitutions and alterations on the basis of the embodiments of the present disclosure to realize the same purposes and/or advantages as the various embodiments described herein. Those skilled in the art should also appreciate that the present disclosure may be practiced without departing from the spirit and scope of the disclosure. Therefore, the scope of protection of the present disclosure is defined as the subject matter set forth in the appended claims

## Claims

1. A multi-beam soldering system (200), comprising:
a multi-beam scanner (210) for generating at least a first beam (214) and a second beam (215), and guiding the first beam (214) to a first element (203) of a soldering zone (202) and guiding the second beam (215) to a second element (204) of the soldering zone (202);
a sensor (220) for detecting at least a first temperature of the first element (203) and a second temperature of the second element (204) simultaneously during soldering process; and
a controller (230) for adjusting parameters of the first beam (214) and the second beam (215) under a condition that the first temperature is substantially different from the second temperature.

2. The multi-beam soldering system as claimed in claim 1, wherein the multi-beam scanner (210) comprises:
a light source (211) for generating at least a beam; and
a lens set (213) for guiding the first beam (214) and the second beam (215).

3. The multi-beam soldering system as claimed in claim 2, wherein the lens set (213) comprises a reflective lens (401) for changing a focus position of the first beam (214) and/or the second beam (215).

4. The multi-beam soldering system as claimed in claim 2, wherein the lens set (213) comprises a beam splitter (501 ; 502) for changing focus positions of the first beam (214) and/or the second beam (215).

5. The multi-beam soldering system as claimed in any of the preceding claims, wherein the multi-beam scanner (210) comprises an actuating device (212), and the actuating device comprises a stepping motor, a voice coil motor, or a piezoelectric actuator.

6. The multi-beam soldering system as claimed in any of the preceding claims, wherein the multi-beam scanner (210) comprises a galvanometric scanner (212), and the galvanometric scanner (212) further comprises a galvanometric scanner lens (301) for changing focus positions of the first beam (214) and/or the second beam (215).

7. The multi-beam soldering system as claimed in any of the preceding claims, wherein the first beam (214) and the second beam (215) are either a plurality of focused light beams or a plurality of parallel light beams.

8. The multi-beam soldering system as claimed in claim 2, wherein the light source (211) is a laser beam, an X ray, an ultraviolet light, a terahertz radiation, a micro wave, or a combination thereof.

9. The multi-beam soldering system as claimed in claim 3, wherein the focus position is changed according to a geometric pattern, and the geometric pattern comprises a circle, a ring, or a polygon.

10. The multi-beam soldering system as claimed in any of the preceding claims, wherein the first beam (214) and/or the second beam (215) are focused on a respective focal spot (602)
and/or wherein the first beam (214) and/or the second beam (215) are converged on a respective non-focal zone (603).

11. The multi-beam soldering system as claimed in any of the preceding claims, wherein the controller (230) is configured to adjust the parameters of the first beam (214) and the second beam (215) under a condition that a difference between the first temperature and the second temperature detected by the sensor is greater than 30%.

12. The multi-beam soldering system as claimed in any of the preceding claims, wherein the sensor (220) is a non-contact type sensor, a contact-type sensor, or an equivalent temperature sensor.

13. The multi-beam soldering system as claimed in any of the preceding claims, wherein a detecting target (221) of the sensor for detecting the first temperature and the second temperature is visible light, invisible light, or a color temperature.

14. The multi-beam soldering system as claimed in any of the preceding claims, wherein the controller (230) is configured to adjust powers of the first beam (214) and the second beam (215)
and/or wherein the controller (230) is a proportional-integral-derivative (PID) controller, a fuzzy controller, a closed-loop controller, or an equivalent feedback controller.

15. A multi-beam soldering method, comprising steps of:
guiding a first beam (214) to heat a first element (203) of a soldering component on a soldering zone (202) of a substrate (201), and guiding a second beam (215) to heat a second element (204) on the soldering zone (202) of the substrate (201);
detecting at least a first temperature of the first element (203) and a second temperature of the second element (204) simultaneously; and
adjusting parameters of the first beam (214) and the second beam (215) under a condition that the first temperature is substantially different from the second temperature.
